# FASCICULE DE BREVET EUROPEEN

(11) **EP 2 299 879 B1**
(45) Date de publication et mention de la délivrance du brevet: **09.05.2012**
(21) Numéro de dépôt: 09742323.0
(22) Date de dépôt: 10.04.2009
(51) Int. Cl.: A47J 31/00, A47J 31/44, A47J 43/044

(54) **PROCÉDÉ DE MOUSSAGE DU LAIT**
VERFAHREN ZUR HERSTELLUNG VON MILCHSCHAUM
METHOD FOR PRODUCING MILK FOAM

(30) Priorité: 15.04.2008 FR 0852501
(43) Date de publication de la demande: 30.03.2011
(73) Titulaire: Seb S.A., 69130 Ecully (FR)
(72) Inventeur: BLONDEL, Mathilde, 21120 Pichanges (FR); MORIN, Gilles, 14210 Sainte Honorine De Fay (FR); DURAND, Lionnel, 14700 Saint Germain Langot (FR); IREMAN, Peter, 14114 Ver Sur Mer (FR); DELIENS, Patrick, 53100 Mayenne (FR)
(74) Mandataire: Novagraaf Technologies
(86) Numéro de dépôt international: PCT/FR2009/050675
(87) Numéro de publication internationale: WO 2009/136125

(56) Documents cités:
- EP-A- 1 038 483
- EP-A- 1 197 175
- WO-A-2005/089572
- NL-C2- 1 016 494

## Description

La présente invention concerne un procédé de moussage du lait, notamment afin de réaliser des boissons à base, entre autres, de café ou de chocolat telles que des cappuccinos ou des macchiatos.

On connaît un procédé de moussage pendant lequel de l'air est introduit dans du lait afin d'obtenir une mousse. Toutefois, il s'avère que la qualité de la mousse, c'est-à-dire son expansion ou sa tenue dans le temps, dépend de nombreux facteurs : sa température (d'environ 5°C en sortie d'un réfrigérateur à environ 20°C à température ambiante), son taux de matière grasse (lait entier, demi-écrémé ou écrémé), et le traitement subi pour sa conservation (lait pasteurisé ou UHT).

Ainsi, NL 1016494 divulgue t'il un procédé de moussage de lait comprenant une étape de moussage, lors de laquelle de l'air est introduit dans du lait de façon à réaliser de la mousse de lait, et qui est précédée par une étape de préchauffage lors de laquelle le lait est chauffé jusqu'à une température comprise entre 30 et 40°C, l'incorporation de l'air étant réalisée, à une vitesse de moussage et pendant l'étape de moussage, par le déplacement d'un outil mécanique mis en rotation.

Le but de l'invention est d'obtenir, quel que soit le type de lait et la température avant sa préparation, une mousse de lait dont la qualité est maîtrisée afin de correspondre à la boisson dont la préparation est envisagée. Le seul fait d'agiter vigoureusement le lait, ou de lui appliquer un déplacement rapide lors de l'opération de formation de la mousse, n'est pas suffisant ou adapté.

Selon l'invention, le procédé de moussage comprend ainsi, en complément de ce qui est précisé ci-avant en référence au document NL 1016494, d'appliquer, pendant l'étape de moussage, une vitesse de rotation de l'outil qui soit constamment au moins égale à ladite vitesse de moussage, et, pendant l'étape de préchauffage, un remuage du lait par le déplacement de cet outil à une vitesse de remuage inférieure aux deux tiers de la vitesse de moussage.

En fait, il s'est avéré, après une étude faite sur l'aptitude du lait à faire de la mousse et sur la stabilité de cette dernière, que les globules de matière grasse contenus dans le lait se présentent sous forme plus ou moins solide jusqu'à une température d'environ 30°C où ils sont en phase liquide, phase dans laquelle leur action anti-mousse disparaît (ou, du moins, est très fortement réduite).

Ainsi, le fait de chauffer le lait jusqu'à au moins 30°C avant d'introduire de l'air pour réaliser la mousse de lait, permet de réaliser une mousse de bonne qualité, et ceci que le lait soit entier, demi-écrémé ou écrémé, pasteurisé ou UHT.

D'autres particularités et avantages de la présente invention apparaîtront dans la description de trois modes de réalisation donnés à titre d'exemples non limitatifs et illustrés dans les dessins mis en annexe, dans lesquels :
La figure 1 est une vue schématique d'un premier dispositif utilisé pour mettre en oeuvre le procédé de moussage selon la présente invention, l'étape en cours étant celle de préchauffage ;
La figure 2 est une vue schématique du premier dispositif, l'étape en cours de moussage ;
La figure 3 est une vue en coupe du premier dispositif ;
La figure 4 est une vue schématique d'un second dispositif utilisé pour mettre en oeuvre le procédé de moussage selon la présente invention, l'étape en cours étant celle de préchauffage ;
La figure 5 est une vue schématique du second dispositif, l'étape en cours de moussage ;
La figure 6 est une vue schématique d'un troisième dispositif utilisé pour mettre en oeuvre le procédé de moussage selon la présente invention, l'étape en cours étant celle de préchauffage ; et
La figure 7 est une vue schématique du troisième dispositif, l'étape en cours de moussage.

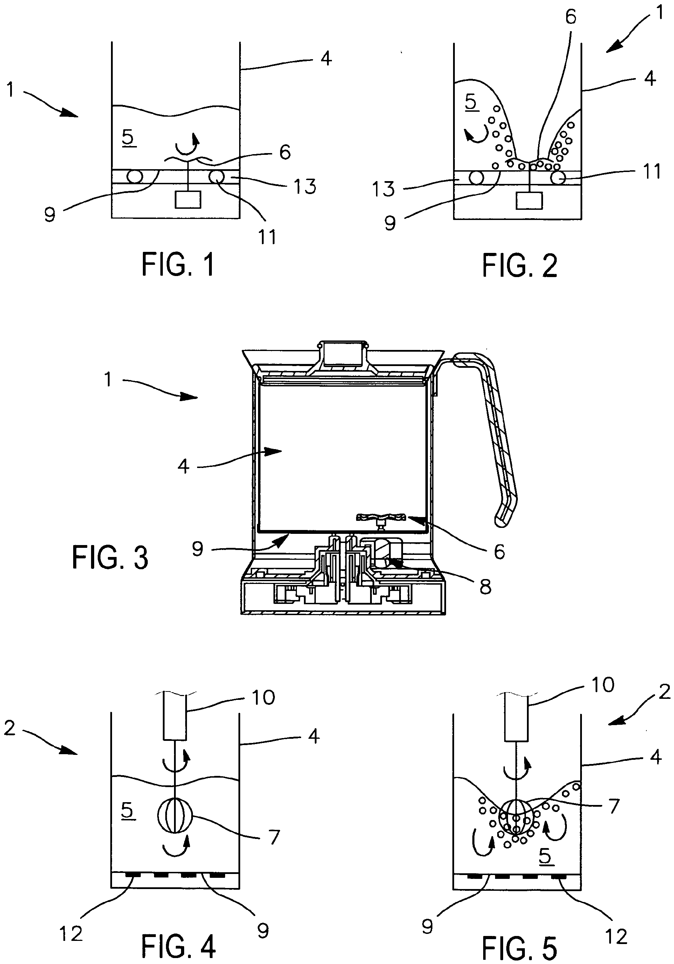

Les différents dispositifs de moussage 1, 2, 3 illustrés aux figures 1 à 7 sont utilisés pour réaliser une mousse de lait, celle-ci étant destinée à la préparation d'une boisson, par exemple à base de café ou de chocolat.

Selon l'invention, le procédé de moussage de lait comprend une étape préalable de chauffage lors de laquelle le lait est chauffé, entre 30 et 40°C avec une température de début de moussage qui peut atteindre 60°C, suivie d'une étape de moussage lors de laquelle de l'air est introduit dans le lait de façon à réaliser de la mousse de lait.

Ainsi, l'air n'est introduit dans le lait en quantité suffisante pour réaliser un moussage uniquement quand le lait a atteint une température de début de moussage qui peut varier, notamment selon la recette de la boisson à préparer, la température de 35°C étant par ailleurs la température optimale pour la réalisation et la tenue de la mousse de lait.

Afin d'améliorer le chauffage du lait pendant l'étape de préchauffage, il est préférable de remuer le lait. Ce remuage n'est pas destiné à réaliser la mousse et il est donc insuffisant pour permettre une incorporation de l'air. Son but est d'homogénéiser la température du lait. Enfin, il peut être nécessaire de continuer de chauffer le lait pendant l'étape de moussage de sorte que le lait (ou plus exactement la mousse de lait) atteigne une température de fin de moussage, supérieure à la température de début de moussage, correspondant à la température de la boisson préparée selon la recette en cours (par exemple 70°C).

Les figures 1 à 5 illustrent deux dispositifs de moussage 1, 2, chacun comprenant un récipient 4 dans lequel est disposé du lait 5, et un outil mécanique 6, 7 dont le déplacement, dans le lait, permet la réalisation de la mousse. Ainsi, selon ces dispositifs 1, 2, pendant l'étape de moussage, l'incorporation de l'air est réalisée par le déplacement de l'outil mécanique 6, 7 à une vitesse de moussage et, dans ces deux modes de réalisation, par sa rotation. A la vitesse de moussage, le brassage du lait est tellement important que l'air environnant est introduit dans le lait, ce qui produit la mousse.

Dans le mode de réalisation illustré par les figures 1 à 3, l' outil mécanique 6 (en l'occurrence, un disque ondulé 6) est monté au fond du récipient 4, et, dans cet exemple de réalisation, son axe de rotation est décalé du centre du fond afin de faciliter le moussage. Le disque 6 est entraîné en rotation par un moteur électrique 8 disposé sous la paroi de fond 9 du récipient.

A titre d'exemple, le disque 6 peut avoir un diamètre compris entre 25 et 35 mm, et de préférence de l'ordre de 31 mm, et comprendre entre 4 et 8 ondulations s'étendant radialement. La profondeur de ces ondulations peut être comprise entre 2 et 6 mm, et de préférence de l'ordre de 4 mm.

Dans le mode de réalisation illustré par les figures 4 et 5, l'outil mécanique 7 est porté par un organe mobile 10 plongeant dans le récipient 4. Cet organe mobile 10 est du type « batteur à oeufs » ou « pied mixeur ».

A titre d'exemple, l'outil mécanique 7 a la forme générale d'une sphère 7 ayant un diamètre compris entre 20 et 50 mm. Elle est formée par des fils (de préférence entre 8 et 12) en arc de cercle. Ces fils, par exemple en inox, peuvent avoir un diamètre compris entre 0,5 et 1 mm, de préférence de l'ordre de 0,8 mm.

Dans ces deux modes de réalisation, à la paroi de fond 9 du récipient 4 est montée un élément résistif électrique 11, 12, ce qui permet de chauffer le lait. Vu l'emploi du dispositif 1, 2, la puissance de chauffage peut être comprise entre 400 et 700 W, et de préférence de l'ordre de 600 W. Dans le premier mode de réalisation, l'élément résistif 11 est une résistance blindée 11 qui est associée à un bloc d'aluminium de répartition 13. Dans le second mode de réalisation, l'élément résistif 12 est formé par une résistance 12 sérigraphiée sur la face externe de la paroi de fond 9 en inox, ce qui permet d'avoir une très grande précision dans la régulation thermique du fait de la faible inertie de ce mode de chauffe (aux figures 4 et 5, la résistance sérigraphiée est représentée de façon exagérée).

De façon plus précise, avec un dispositif 1 conforme au premier mode de réalisation, afin d'incorporer une quantité importante d'air dans le lait 5, pendant l'étape de moussage, la vitesse de moussage de l'outil 6 est supérieure à 2500 tr/min, et de préférence supérieure à 3000 tr/min.

Par ailleurs, selon les recettes, et donc selon le taux d'expansion de la mousse souhaité (c'est-à-dire selon la consistance de la mousse), pendant l'étape de moussage, la vitesse de rotation de l'outil 6, 7 peut être soit constamment au moins égale à la vitesse de moussage, soit de façon intermittente. Dans ce dernier cas, l'outil 6, 7 passe alternativement par au moins une phase de moussage pendant laquelle sa vitesse de rotation est constamment au moins égale à la vitesse de moussage, et par au moins une phase de mélange pendant laquelle sa vitesse de rotation est égale à une vitesse de mélange inférieure à la vitesse de moussage. La vitesse de mélange est, de préférence, au plus égale aux deux tiers de la vitesse de moussage.

De façon plus précise, avec un dispositif 1 conforme au premier mode de réalisation, la vitesse de mélange est constamment inférieure à 2000 tr/min, de préférence inférieure à 1500 tr/min, voire inférieure à 1000 tr/min.

Par ailleurs, le début et/ou la fin d'une phase de moussage peut être déterminée, par exemple, soit d'après un décompte de temps, soit d'après une mesure de la température du lait (quand le lait est chauffé pendant l'étape de moussage). Dans le cas d'une détermination de la fin d'une phase par décompte de temps, ce décompte est initié au début de ladite phase. Ainsi, la durée d'une phase de moussage peut être définie par une durée (par exemple 8 secondes) ou par une montée en température (par exemple 5 °C).

Par ailleurs, la vitesse de moussage de l'outil 6, 7 peut être constante ou varier en fonction d'un programme informatique. Il en est de même de la vitesse de mélange. En outre, lorsque l'étape de moussage comprend plusieurs phases de moussage et/ou plusieurs phases de mélange, les vitesses de moussage et/ou de mélange peuvent soit être identiques, soit être propres à chaque étape.

En outre, la vitesse de moussage de l'outil 6, 7 peut être déterminée en fonction du volume du lait à mousser (du volume de lait dans le récipient 4) . Ce volume peut notamment être estimé par la mesure de la vitesse de montée en température du lait pendant l'étape de préchauffage. Il en est de même de la vitesse de mélange.

Par ailleurs, pendant l'étape de préchauffage, le lait 5 est de préférence remué par le déplacement de l'outil 6, 7 pour améliorer le chauffage par homogénéisation. La vitesse de rotation de remuage de l'outil est suffisamment faible pour éviter une introduction d'air conduisant à un moussage. De préférence, cette vitesse de remuage est au plus égale aux deux tiers de la vitesse de moussage.

Ainsi, dans le premier mode de réalisation, la vitesse de remuage est au plus égale à 1500 tr/min, et de préférence, au plus égale à 1000 tr/min.

Comme les vitesses de moussage et de mélange, la vitesse de remuage peut être constante. Elle peut également être déterminée en fonction du volume du lait à mousser (éventuellement en fonction de la vitesse de montée en température du lait).

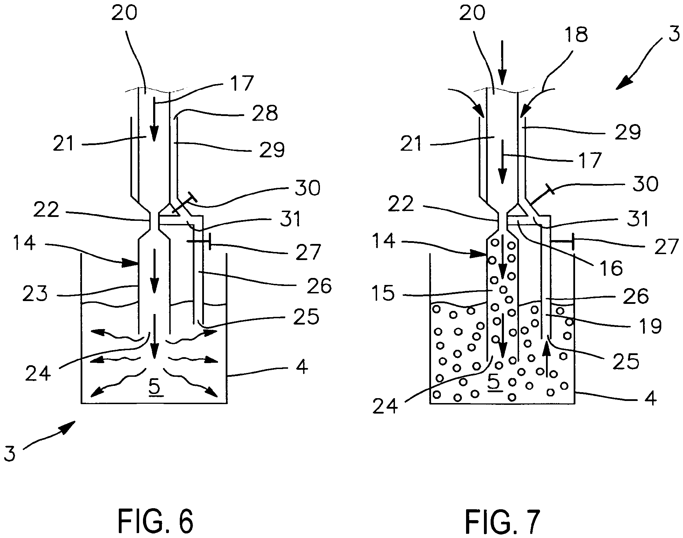

Les figures 6 et 7 illustrent un troisième dispositif de moussage 3 qui comprend un récipient 4 dans lequel est disposé du lait 5, et une buse d'injection 14 utilisée pour réaliser le moussage. Ainsi, selon ce dispositif 3, pendant l'étape de moussage, l'incorporation de l'air est réalisée par l'utilisation de la buse d'injection 14.

De façon plus précise, l'air injecté fait partie d'un mélange d'air, de lait et de vapeur 15 qui est formé lors de l'aspiration d'un mélange d'air et de lait 16 par un flux de vapeur sèche 17 produite par le dispositif 3. Le mélange d'air et de lait 16 est lui-même formé lors de l'aspiration d'air extérieur 18 par un flux de lait 19 provenant du lait préalablement chauffé.

Ainsi, la buse d'injection 14 comprend un orifice d'entrée de vapeur 20 par lequel la vapeur est introduite dans la buse 14, cet orifice 20 étant à l'extrémité amont d'une conduite d'amenée de vapeur 21 qui présente un venturi 22, et qui se prolonge au-delà de ce dernier par une conduite d'injection 23 dont l'extrémité aval est formée par un orifice de sortie 24. La buse d'injection 14 comprend également un orifice d'entrée de lait 25, cet orifice 25 étant à l'extrémité amont d'une conduite d'amenée de lait 26 qui s'étend parallèlement à la conduite d'injection 23, qui comporte une vanne 27 et qui débouche dans le venturi 22. La buse d'injection 14 comprend enfin un orifice d'entrée d'air 28, cet orifice 28 étant à l'extrémité amont d'une conduite d'amenée d'air 29 qui, dans le présent mode de réalisation, est une conduite annulaire au centre de laquelle se trouve la conduite d'amenée de vapeur 21, qui comporte une vanne 30 et qui débouche (en 31) dans la conduite d'amenée de lait 26. La disposition de la conduite d'amenée d'air par rapport à la conduite d'amenée de vapeur permet à la vapeur 17 de réchauffer l'air avant qu'il soit mélangé au lait, afin d'améliorer la stabilité de la mousse.

Ainsi, pendant l'étape de moussage, la vapeur produite par le dispositif 3 circule le long de la conduite d'amenée de vapeur 21 puis de la conduite d'injection 23 en passant par le venturi 22. La dépression aspire le mélange d'air et de lait, l'air provenant de l'extérieur via la conduite d'amenée d'air 29, et le lait provenant du récipient 4 via la conduite d'amenée de lait 26.

Par ailleurs, ce dispositif de moussage 3 permet, pendant l'étape de préchauffage, de chauffer le lait par l'injection d'un flux de vapeur d'eau sèche 17 par une buse d'injection de vapeur qui, en l'occurrence, est la buse 6 utilisée pour l'injection d'air lors de l'étape de moussage. L'emploi de vapeur sèche permet, grâce à la chaleur latente de celle-ci, d'apporter une grande quantité d'énergie au lait à chauffer. Pendant l'étape de préchauffage, la vanne 30 de la conduite d'amenée d'air 29 est fermée afin d'éviter le moussage. Par ailleurs, il est préférable que la vanne 27 de la conduite d'amenée de lait 26 soit ouverte afin d'améliorer le remuage du lait et l'homogénéité de sa température.

La présente invention n'est pas limitée aux modes de réalisation donnés à titres d'exemples. Ainsi, il serait possible d'utiliser un dispositif comprenant deux buses différentes, une pour le préchauffage, l'autre pour le moussage. Il serait également possible d'avoir un dispositif de moussage ayant une (ou deux) buses ainsi qu'un récipient à fond chauffant et/ou un outil mécanique.

## Revendications

1. Procédé de moussage de lait comprenant une étape de moussage, lors de laquelle de l'air est introduit dans du lait de façon à réaliser de la mousse de lait, et qui est précédée par une étape de préchauffage lors de laquelle le lait est chauffé jusqu'à une température comprise entre 30 et 40°C, l'incorporation de l'air étant réalisée, à une vitesse de moussage et pendant l'étape de moussage, par le déplacement d'un outil mécanique (6,7) mis en rotation, **caractérisé en ce que**, pendant l'étape de moussage, la vitesse de rotation de l'outil (6,7) est constamment au moins égale à ladite vitesse de moussage, et, pendant l'étape de préchauffage, le lait est remué par le déplacement de l'outil (6, 7) à une vitesse de remuage inférieure aux deux tiers de la vitesse de moussage.

2. Procédé de moussage de lait selon la revendication 1, **caractérisé en ce que** pendant l'étape de moussage, le lait est chauffé jusqu'à atteindre une température supérieure à la température de début de moussage.

3. Procédé de moussage de lait selon l'une des revendications 1 ou 2, **caractérisé en ce que** le lait est disposé dans un récipient (4) comprenant une paroi de fond (9) à l'endroit de laquelle est monté un élément résistif électrique (11) pour le chauffage du lait, l'outil mécanique (6) étant monté sur le récipient (4), au fond.

4. Procédé de moussage de lait selon l'une des revendications précédentes, **caractérisé en ce que** l'outil mécanique (6) comprend un disque ondulé entraîné en rotation par un moteur électrique (8) disposé sous ladite paroi de fond (9) du récipient.

5. Procédé de moussage de lait selon l'une des revendications précédentes, **caractérisé en ce que** la vitesse de moussage de l'outil est constante.

6. Procédé de moussage de lait selon l'une des revendications précédentes, **caractérisé en ce que** la vitesse de moussage de l'outil est déterminée en fonction du volume du lait à mousser.

7. Procédé de moussage de lait selon la revendication 6, **caractérisé en ce que** la vitesse de remuage de l'outil (6, 7) est constante.

8. Procédé de moussage de lait selon la revendication 6 ou 7, **caractérisé en ce que** la vitesse de remuage de l'outil (6, 7) est déterminée en fonction du volume du lait à mousser.

9. Procédé de moussage de lait selon l'une des revendications 1 à 8, **caractérisé en ce que**, pendant l'étape de moussage, l'incorporation de l'air est réalisée par l'utilisation d'une buse d'injection (14).

10. Procédé de moussage de lait selon la revendication 9, **caractérisé en ce que** l'air injecté fait partie d'un mélange d'air et de lait formé lors de l'aspiration d'air extérieur par un flux de lait qui provient du lait préalablement chauffé.

11. Procédé de moussage de lait selon la revendication 10, **caractérisé en ce que** l'air injecté provient d'un mélange d'air, de lait et de vapeur qui est formé lors de l'aspiration, par un flux de vapeur d'eau sèche, du mélange d'air et de lait.

12. Procédé de moussage de lait selon l'une des revendications 1 à 11, **caractérisé en ce que**, pendant l'étape de préchauffage, le préchauffage du lait est réalisé par l'injection d'un flux de vapeur d'eau sèche par une buse d'injection (14).

13. Procédé de moussage de lait selon la revendication 12, **caractérisé en ce que**, pendant l'étape de préchauffage, la vapeur injectée fait partie d'un mélange de vapeur et de lait formé lors de l'aspiration, par un flux de vapeur d'eau sèche, du lait contenu dans le récipient dans lequel débouche la buse d'injection (14).

## Claims

1. Method for foaming milk comprising a foaming step, in which air is introduced into the milk so as to produce milk foam, and which is preceded by a preheating step in which the milk is heated to a temperature of between 30 and 40°C, the incorporation of air being carried out, at a foaming speed and during the foaming step, by the movement of a mechanical tool (6, 7) set in rotation, **characterised in that** during the foaming step, the rotational speed of the tool (6, 7) is constantly at least equal to the said foaming speed, and, during the preheating step, the milk is stirred by the movement of the tool (6, 7) at a stirring speed less than two thirds of the foaming speed.

2. Method for foaming milk according to claim 1, **characterised in that** during the foaming step, the milk is heated until it reaches a temperature above the foam production start temperature.

3. Method for foaming milk according to any one of claims 1 or 2, **characterised in that** the milk is disposed in a container (4) comprising a bottom wall (9) at the location of which is mounted an electrical resistive element (11) for heating the milk, the mechanical tool (6) being mounted on the container (4), at the bottom.

4. Method for foaming milk according to any one of the preceding claims, **characterised in that** the mechanical tool (6) comprises a corrugated disc rotatably driven by an electric motor (8) disposed under said bottom wall (9) of the container.

5. Method for foaming milk according to any one of the preceding claims, **characterised in that** the foaming speed of the tool is constant.

6. Method for foaming milk according to any one of the preceding claims, **characterised in that** the foaming speed of the tool is determined in relation to the volume of milk to be foamed.

7. Method for foaming milk according to claim 6, **characterised in that** the stirring speed of the tool (6, 7) is constant.

8. Method for foaming milk according to claim 6 or 7, **characterised in that** the stirring speed of the tool (6, 7) is determined in relation to the volume of milk to be foamed.

9. Method for foaming milk according to any one of claims 1 to 8, **characterised in that** during the foaming step, the incorporation of air is accomplished by the use of an injection nozzle (14).

10. Method for foaming milk according to claim 9, **characterised in that** the injected air is part of a mixture of air and milk formed during the drawing up of outside air by a flow of milk which comes from the preheated milk.

11. Method for foaming milk according to claim 10, **characterised in that** the injected air comes from a mixture of air, milk and steam which is formed during the drawing up, by a flow of dry steam, of the mixture of air and milk.

12. Method for foaming milk according to any one of claims 1 to 11, **characterised in that**, during the preheating step, preheating of the milk is accomplished by injecting a flow of dry steam via an injection nozzle (14).

13. Method for foaming milk according to claim 12, **characterised in that** during the preheating step, the injected steam is part of a mixture of steam and milk formed during the drawing up, by a flow of dry steam, of the milk held in the container into which the injection nozzle (14) emerges.

## Patentansprüche

1. Verfahren zum Aufschäumen von Milch, umfassend einen Schritt des Aufschäumens, bei dem Luft in Milch eingebracht wird, so dass Milchschaum erzeugt wird, und dem ein Schritt des Vorwärmens vorangeht, während dessen die Milch auf eine Temperatur von zwischen 30 und 40°C erwärmt wird, wobei das Untermischen der Luft mit einer Aufschäumgeschwindigkeit und während des Aufschäumschrittes durch die Verlagerung eines in Drehung versetzten mechanischen Rührwerkzeuges (6, 7) realisiert ist, **dadurch gekennzeichnet, dass** während des Aufschäumschrittes die Rotationsgeschwindigkeit des Rührwerkzeuges (6, 7) ständig mindestens gleich der Aufschäumgeschwindigkeit ist und dass während des Vorwärmschrittes die Milch durch die Verlagerung des Rührwerkzeuges (6,7) mit einer Rührgeschwindigkeit von weniger als zwei dritteln der Aufschäumgeschwindigkeit aufgerührt wird.

2. Verfahren zum Aufschäumen von Milch nach Anspruch 1, **dadurch gekennzeichnet, dass** während des Aufschäumschrittes die Milch erwärmt wird bis sie eine Temperatur oberhalb der Temperatur zu Beginn des Aufschäumens erreicht.

3. Verfahren zum Aufschäumen von Milch nach einem der Ansprüche 1 oder 2, **dadurch gekennzeichnet, dass** sich die Milch in einem Behälter (4) befindet, der eine Bodenwand (9) aufweist, an deren Position ein elektrisches Widerstandselement (11) zum Erwärmen der Milch angebracht ist, wobei das mechanische Rührwerkzeug (6) an dem Behälter am Boden angebracht ist.

4. Verfahren zum Aufschäumen von Milch nach einem der vorhergehenden Ansprüche, **dadurch gekennzeichnet, dass** das mechanische Rührwerkzeug (6) eine gewellte Scheibe umfasst, die durch einen Elektromotor (8), der unter der Bodenwand (9) angeordnet ist, rotatorisch angetrieben wird.

5. Verfahren zum Aufschäumen von Milch nach einem der vorhergehenden Ansprüche, **dadurch gekennzeichnet, dass** die Aufschäumgeschwindigkeit des Rührwerkzeuges konstant ist.

6. Verfahren zum Aufschäumen von Milch nach einem der vorhergehenden Ansprüche, **dadurch gekennzeichnet, dass** die Aufschäumgeschwindigkeit des Rührwerkzeuges in Abhängigkeit vom Volumen der aufzuschäumenden Milch bestimmt ist.

7. Verfahren zum Aufschäumen von Milch nach Anspruch 6, **dadurch gekennzeichnet, dass** die Rührgeschwindigkeit des Rührwerkzeuges (6,7) konstant ist.

8. Verfahren zum Aufschäumen von Milch nach Anspruch 6 oder 7, **dadurch gekennzeichnet, dass** die Rührgeschwindigkeit des Rührwerkzeuges (6,7) in Abhängigkeit vom Volumen der aufzuschäumenden Milch bestimmt ist.

9. Verfahren zum Aufschäumen von Milch nach einem der Ansprüche 1 bis 8, **dadurch gekennzeichnet, dass** während des Aufschäumschrittes das Untermischen der Luft durch Verwendung einer Einspritzdüse (14) realisiert ist.

10. Verfahren zum Aufschäumen von Milch nach Anspruch 9, **dadurch gekennzeichnet, dass** die eingespritzte Luft Teil einer Mischung aus Luft und Milch ist, welche beim Ansaugen von Außenluft durch einen Zustrom der zuvor erwärmten Milch gebildet wird.

11. Verfahren zum Aufschäumen von Milch nach Anspruch 10, **dadurch gekennzeichnet, dass** die eingespritzte Luft von einer Mischung aus Luft, Milch und Dampf stammt, welche beim Ansaugen durch einen Zustrom von trockenem Wasserdampf und der Mischung aus Luft und Milch gebildet wird.

12. Verfahren zum Aufschäumen von Milch nach einem der Ansprüche 1 bis 11, **dadurch gekennzeichnet, dass** während des Schritts des Vorwärmens das Vorwärmen der Milch durch Einspritzung eines Zustroms von trockenem Wasserdampf durch eine Einspritzdüse (14) realisiert wird.

13. Verfahren zum Aufschäumen von Milch nach Anspruch 12, **dadurch gekennzeichnet, dass** während des Schritts des Vorwärmens der eingespritzte Dampf Teil einer Mischung aus Dampf und Milch ist, welche beim Ansaugen durch einen Zustrom von trockenem Wasserdampf aus der Milch gebildet wird, die in dem Behälter, in den die Einspritzdüse mündet, enthalten ist.
